# EUROPÄISCHE PATENTSCHRIFT

(11) **EP 0 824 743 B1**
(45) Veröffentlichungstag und Bekanntmachung des Hinweises auf die Patenterteilung: **17.12.2003**
(21) Anmeldenummer: 97902146.6
(22) Anmeldetag: 19.02.1997
(51) Int. Cl.: G07F 7/10

(54) **IDENTIFIKATIONSMEDIUM MIT PASSIVEM ELEKTRONISCHEM DATENTRÄGER**
IDENTIFICATION MEDIUM WITH PASSIVE ELECTRONIC DATA CARRIER
MOYEN D'IDENTIFICATION AVEC SUPPORT DE DONNEES ELECTRONIQUE PASSIF

(30) Priorität: 11.03.1996 CH 62896
(43) Veröffentlichungstag der Anmeldung: 25.02.1998
(73) Patentinhaber: Kaba Schliesssysteme AG, 8620 Wetzikon (CH)
(72) Erfinder: LOCHER, Johann, CH-8620 Wetzikon (CH); GRAF, Ulrich, CH-8405 Winterthur (CH)
(74) Vertreter: Frei, Alexandra Sarah
(86) Internationale Anmeldenummer: CH9700063
(87) Internationale Veröffentlichungsnummer: WO97034265

(56) Entgegenhaltungen:
- EP-A- 0 292 248
- EP-A- 0 332 117
- EP-A- 0 617 387
- EP-A- 0 644 513
- WO-A-91/14237
- WO-A-92/13322
- DE-A- 2 919 753
- DE-A- 3 740 794
- FR-A- 2 591 008
- FR-A- 2 606 909

## Beschreibung

Die Erfindung betrifft ein berührungsloses Identifikationsmedium mit passivem elektronischem Datenträger gemäss Oberbegriff von Patentanspruch 1, eine Anlage mit derartigen Identifikationsmedien nach Anspruch 18 und ein Verfahren zur Initialisierung eines Identifikationsmediums nach Anspruch 21. Derartige Identifikationsmedien sind für verschiedene Applikationen bekannt, z.B. als Zutrittskarten für bestimmte Bereiche einer Firma (elektronische Schlüssel), für die Zeitwirtschaft, als Zugangsmedien für die Benützung von Geräten, z.B. von Datenanlagen, oder auch als Wertkartensysteme zum Bezug von Leistungen. Für jede unabhängige Applikation ist dabei ein eigenes Medium z.B. in Form einer Karte oder eines elektronischen Schlüssels erforderlich. Eine neue Applikation, welche ein Benützer anwenden will, erfordert wieder ein zusätzliches neues Medium. So muss ein Benützer, der verschiedene Applikationen benützen will, auch entsprechend viele einzelne Medien mitführen. Dies ist einerseits aufwendig und umständlich, und es besteht anderseits die Gefahr, eines dieser vielen Medien oder Karten zu verlieren oder zu vergessen und sie dann nicht zur Verfügung zu haben, wenn sie benötigt wird.

Bei bisherigen Kontaktkartensystemen sind Multiapplikationen mit vom System gegebenen Beschränkungen bekannt Die WO 92/13322 offenbart z.B. das Laden von mehreren unabhängigen Applikationen durch eine Zentrale in Mikroprozessor-Kontaktkarten (chip cards). Die EP 0 644 513A beschreibt Kontaktkarten (smart cards), in welche mehrere unabhängige Applikationen von verschiedenen Anwendern durch den Systeminhaber installiert werden können. Diese bekannten Systeme betreffen Kontaktkarten mit Kontaktkommunikation, welche sich in ihrem Aufbau, Betriebssystemen und Systemarchitektur vollständig von Systemen mit berührungslosen Identifikationsmedien und mit berührungsloser codierter HF-Kommunikation unterscheiden, so dass diese bekannten Kontaktkarten Systeme schon grundsätzlich nicht auf berührungslose Systeme übertragbar sind. Als weiterer grundsätzlicher Unterschied muss die Installation von unabhängigen Applikationen in die Kontaktkarten von einer Zentrale aus bzw. durch den Systeminhaber selber erfolgen. Ein Anwender kann seine Applikation somit nicht selber in die Identifikationsmedien installieren.
Die DE 37 40 794A beschreibt eine elektronisch datenverarbeitende Armbanduhr mit einem Mikrocomputer für den drahtlosen Dialog mit entsprechenden elektronischen Anlagen. Aus diesem bekannten Stand der Technik sind keine Lösungen der nachfolgenden Aufgabe bekannt.

Es ist daher Aufgabe der vorliegenden Erfindung, diese Unzulänglichkeiten und Einschränkungen bisheriger Lösungen zu überwinden und ein berührungsloses Identifikationsmedium zu schaffen, mit welchem mehrere unabhängige Applikationen mit einem einzigem Medium benutzbar sind. Dabei sollte die Handhabung einfach, und berührungslos, aus Distanz (hands free) sicher funktionieren. Die Sicherheit der übertragenen Daten sollte dabei gewährleistet sein bezüglich Störungen, Verlust wie auch bezüglich Betrugsversuchen, und die Unabhängigkeit der verschiedenen Applikationen muss so gesichert sein, dass keine unerwünschte Einflussnahme auf andere Applikationen möglich ist. Erwünscht ist auch, dass spätere zusätzliche Applikationen auch auf das selbe Identifikationsmedium aufgenommen werden können.
Diese Aufgabe wird erfindungsgemäss gelöst durch ein Identifikationsmedium gemäss Patentanspruch 1.
Die abhängigen Patentansprüche betreffen vorteilhafte Weiterbildungen der Erfindung.
Im folgenden wird die Erfindung anhand von Figuren und Beispielen weiter erläutert. Es zeigen
- Fig. 1: ein erfindungsgemässes Identifikationsmedium mit segmentiertem Applikationsdatenfeld AD
- Fig. 2: eine zugeordnete dezentrale Schreib- und Lesestation WR
- Fig. 3a, b: den Aufbau eines Identifikationsmediums mit grossflächiger Antenne
- Fig. 4a, b: Datenorganisationen mit gemeinsamem Datenfeld und segmentiertem Applikationsdatenfeld mit mehreren Applikationssegmenten
- Fig. 5: eine Datenorganistion eines Applikationssegments mit Segment Header SCDF und Applikationsdatenfeld SADF
- Fig. 6: eine Datenorganisation eines Applikationssegments mit vererbtem Basisdatensatz (Stamp)
- Fig. 7: den Zusammenhang zwischen Organisationslevel und vererbtem Basisdatensatz (Stamp)
- Fig. 8a, b: das hierarchische Autorisierungskonzept A des Systems für alle Identifikationsmedien und alle zugeordneten Schreib- und Lesestationen mit Organisationslevels
- Fig. 9: den Zusammenhang zwischen Organisationslevel und Datenorganisation
- Fig. 10: illustriert die nicht kopierbare Erzeugung von Identifikationsmedien
- Fig. 11: Funktion und Ablauf der Kommunikation zwischen einem Identifikationsmedium und einer Schreib- und Lesestation
- Fig. 12: die Funktion eines Schattenspeichers im Applikationsdatenfeld
- Fig. 13: einen gemeinsamen Wertbereich (Cash Segment) als Applikationssegment im ADF
- Fig. 14: ein Beispiel der Datenorganisation mit gemeinsamem Wertbereich
- Fig. 15: die Systemkompatibilität von segmentierten und nicht-segmentierten Identifikationsmedien
- Fig. 16: ein Beispiel einer Anlage mit mehreren unabhängigen Applikationen, mit mehreren Schreib- und Lesestationen und mehreren segmentierten Identifikationsmedien
- Fig. 17: ein Anwendungsbeispiel einer Anlage an einem Ferienort mit mehreren unabhängigen Applikationen
- Fig. 18, 19: Beispiele von Identifikationsmedien, welche als Identifikationsträger an einem persönlichen Armband mitführbar sind.

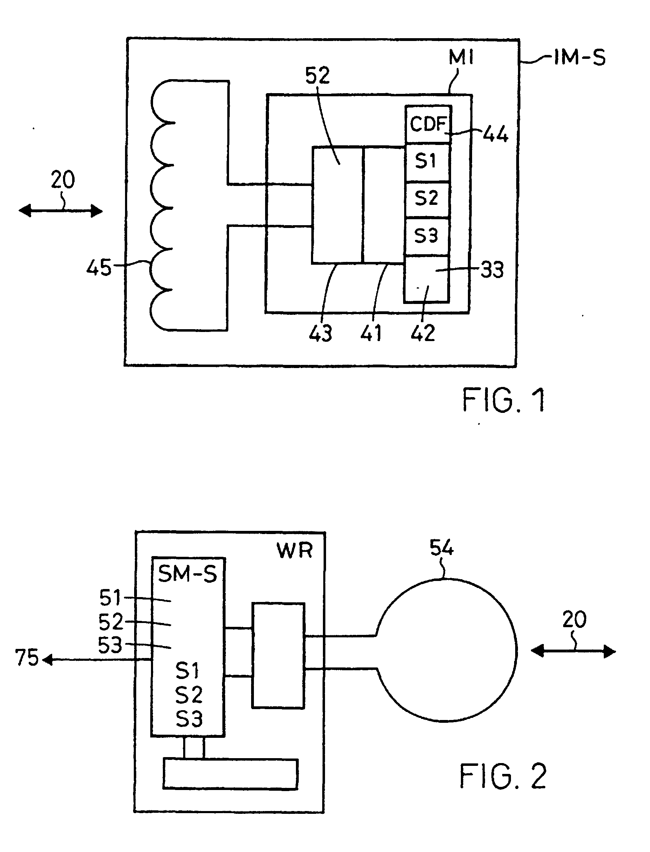

Figur 1 zeigt schematisch ein erfindungsgemässes Identifikationsmedium IM-S mit integriertem passivem Datenträger MI, dessen Betriebsenergie von der Schreib- und Lesestation WR ausgesendet und mittels einer HF-Antenne 45 aufgefangen wird. Der Datenträger MI weist einen hochintegrierten Spezialchip (ASIC) auf mit einem Prozessor 41, einem Datenspeicher 42 (z.B. in Form eines EEPROM) sowie mit einer Steuerelektronik 43. Steuerelektronik und Prozessor steuern den gesamten externen und internen Datenaustausch, codieren die Sendedaten und decodieren die empfangenen Daten und enthalten den gesamten Hochfrequenzteil zur Speisung der Antenne 45 inkl. Taktaufbereitung und Synchronisation für den Empfang von Energie und Daten der Sendestation WR.

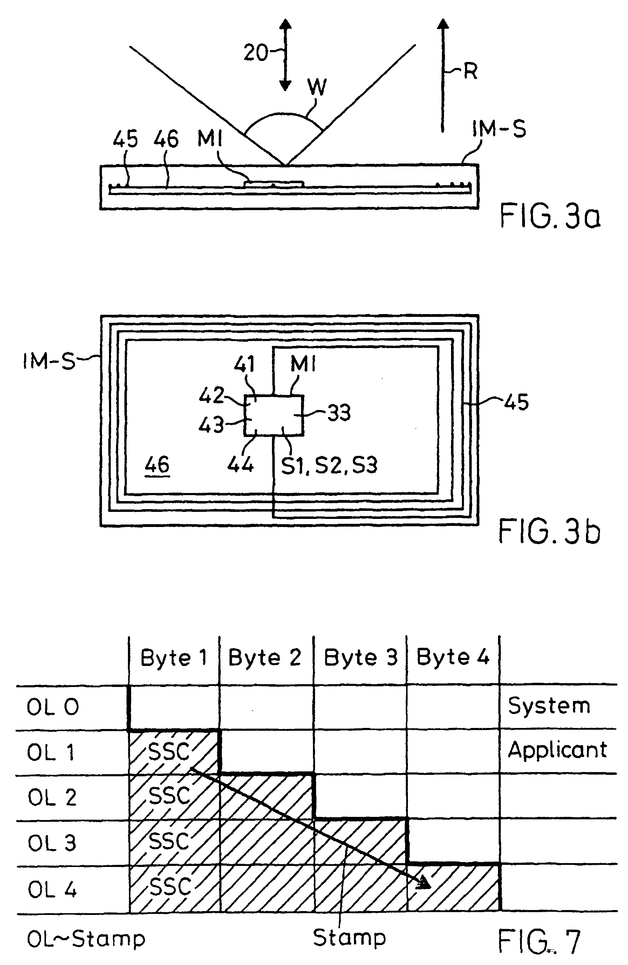

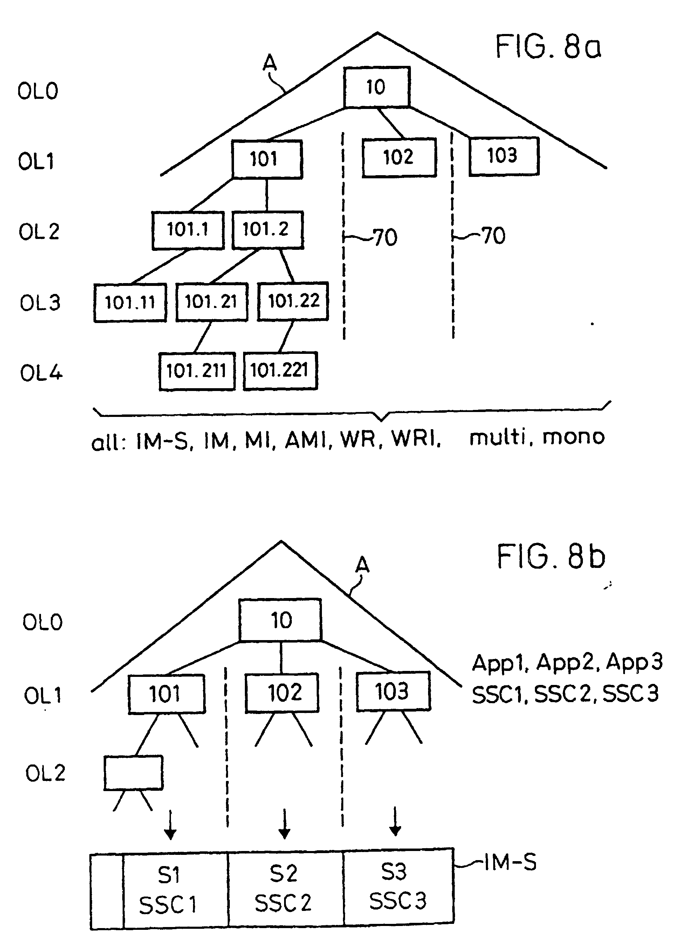

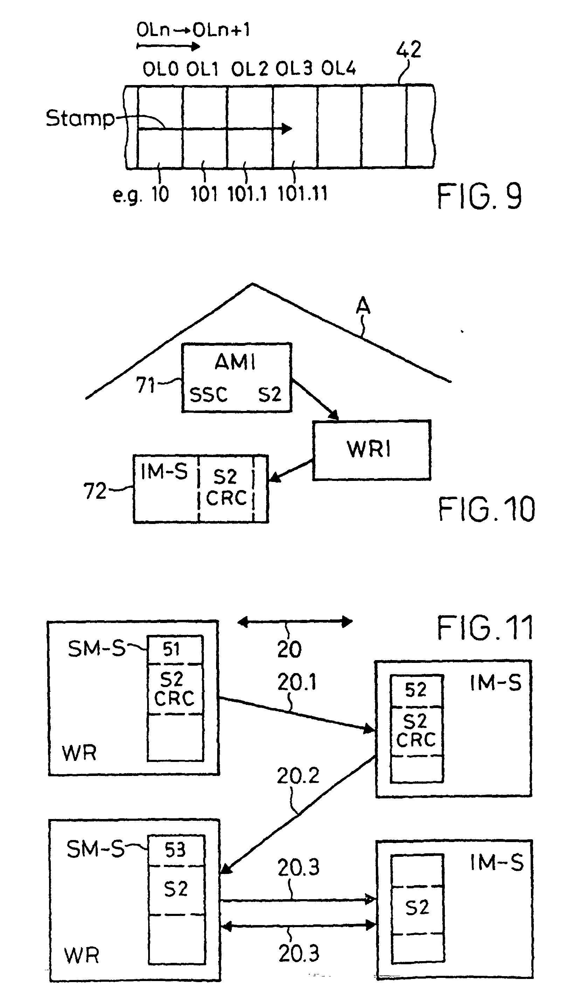

Die Antenne 45 kann relativ grossflächig ausgebildet sein, wie in Figur 3b dargestellt ist, damit sich für alle Applikationen bzw. Applikationssegmente S1, S2, S3 gleichermassen eine relativ hohe Kommunikationsreichweite R ergibt.
Der Pfeil 20 illustriert die HF-Kommunikation mit der Schreib- und Lesestation WR (siehe Figur 2). Der Datenträger MI enthält ein unveränderbares Systemprogramm mit Sicherheitsfunktionen wie Prüfsummenkontrolle CRC und Verschlüsselungsalgorithmen 52. Der Datenspeicher 42 enthält dabei mehrere unabhängige Applikationssegmente S1, S2, S3 für frei verfügbare Anwendungen von unabhängigen Anwendern bzw. Lizenznehmern (SSC). Wie im folgenden weiter erläutert wird, weist der Speicher 42 eine Datenorganisation auf mit einem gemeinsamen Datenfeld CDF, welches unveränderbare und nicht kopierbare Stammdaten mit einer Unikatsnummer 44 enthält, mit einem segmentierbaren Applikationsdatenfeld ADF, in welchem mehrere unabhängige Applikationen (App1, App2, App3) in Applikationssegmenten S1, S2, S3 einschreibbar sind, wobei jedes Applikationssegment eine Segmentkennung enthält. Dabei ist für alle Identifikationsmedien IM-S und alle zugeordneten Schreib- und Lesestationen WR gültiges hierarchisches Autorisierungssystem A festgelegt, mit welchem jedes Identifikationsmedium IM-S initialisiert werden muss und mit welchem die gegenseitige Unbeeinflussbarkeit aller unabhängigen Applikationen mit deren Applikationssegmenten S1, S2, S3 sichergestellt ist. (Fig. 8, 10)

Dank diesem Aufbau ist der erfindungsgemässe Identifikationsträger bezüglich jeder Applikation
weder auslesbar noch veränderbar und hardwaremässig auch nicht nachbaubar.

Figur 2 zeigt schematisch eine den Identifikationsmedien IM-S zugeordnete autonome und dezentral funktionsfähige Schreib- und Lesestation WR zur berührungslosen Kommunikation mit den Identifikationsmedien IM-S. Die Schreib- und Lesestation weist ein Sicherheitsmodul SM-S, eine separate Sende- und Empfangsantenne 54, eine Stromversorgung und eine zusätzliche Schnittstelle zu einem übergeordneten Rechner 75 auf. Das Sicherheitsmodul SM-S enthält alle Kommunikationsfunktionen mit den Datenträgern MI bzw. einem zugeordneten Applikationssegment des Identifikationsmediums. Dies umfasst die HF-Aufbereitung, die Verschlüsselung und Überprüfung der Daten auf korrekte Übertragung, die Prüfung der Lese- und Schreibberechtigung eines Identifikationsmediums bzw. Applikationssegments durch diese Schreibund Lesestation sowie die Kommunikation mit einem übergeordneten Rechner. Die Sicherheitsfunktionen umfassen dabei Codieren und Decodieren der Daten, Identifizierung des Datenträgers MI und des betreffenden Applikationssegments, sowie Berechnung von Prüfsummen (CRC) zur fehlerfreien Datenübertragung. Der Kommunikationsablauf zwischen Identifikationsmedien IM-S und Schreib-Lesestationen WR wird später anhand von Figur 11 erläutert.

Die Figuren 3a und 3b zeigen in zwei Ansichten den Aufbau eines Identifikationsmediums IM-S mit einem Datenträger MI und mit einer Antenne 45. Diese Elemente sind vorzugsweise einstückig ausgebildet und dazu beispielsweise auf einer gedruckten Schaltung 46 angeordnet. Wie aus der Figur 3 ersichtlich ist, kann die Antennenfläche damit relativ gross ausgebildet sein, so dass für alle Applikationen und Applikationssegmente eines Identifikationsmediums IM-S besonders gute Kommunikationseigenschaften erreicht werden. Dies sind vor allem eine hohe Reichweite R bis zu mehreren Dezimetern und ein grosser Raumwinkelbereich W, in welchem die Kommunikation durchführbar ist, und eine weitgehende Unabhängigkeit von der relativen Positionierung des Identifikationsmediums und der zugeordneten Schreib- und Lesestation WR. Da mit einem einzigen erfindungsgemässen Identifikationsmedium IM-S viele bisherige einzelne Identifikationsmedien mit je nur einer Applikation ersetzt werden, kann dieses Multi-Identifikationsmedium IM-S entsprechend aufwendiger aufgebaut sein, z.B. mit grösserer Antenne und weiteren, die Kommunikation und Reichweite verbessernden Eigenschaften. Überdies wird damit natürlich auch eine grosse Kosteneinsparung erreicht.

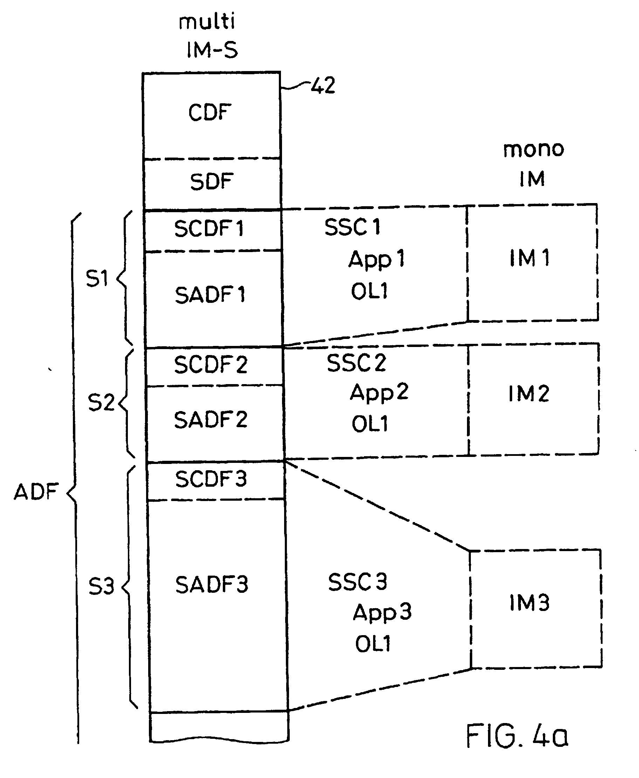

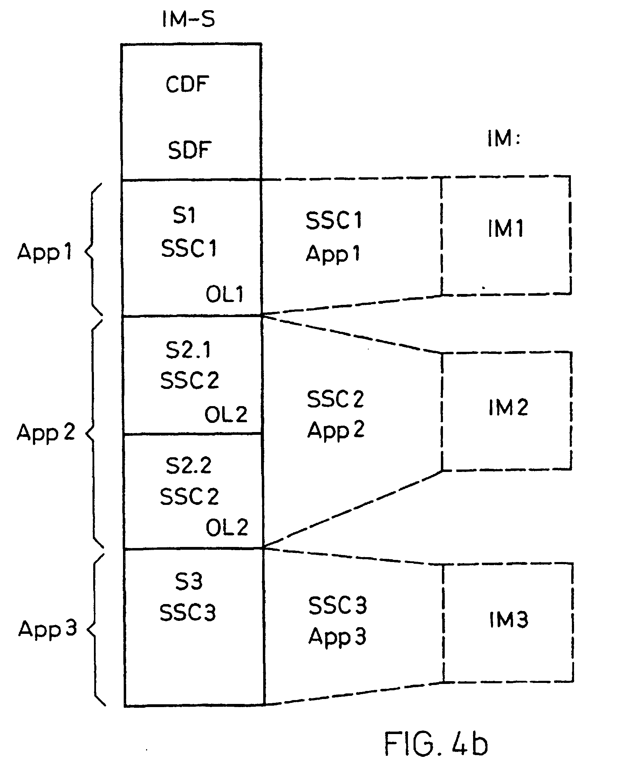

Die Figuren 4 bis 6 illustrieren die Datenorganisation des Speichers 42 der erfindungsgemässen segmentierten Identifikationsmedien IM-S. Vorzugsweise weist der veränderbare Speicher 42 als EEPROM mindestens 256 Byte Speicherplatz auf. Je nach Bedarf, d.h. entsprechend der Anzahl und Grösse der vorgesehenen Applikationssegmente S1, S2, S3 usw., welche in einem Identifikationsmedium IM-S untergebracht werden sollen, kann auch ein grösserer Speicher, z.B. mit 1 KByte, 4 KByte usw., eingesetzt sein. Die Speichergrösse jedes Applikationssegments ist mit Vorteil frei wählbar, so dass je nach Bedarf und bis zur Ausfüllung der gesamten Speicherkapazität eine Applikation nach der andern in ein Identifikationsmedium IM-S eingeschrieben werden kann.

Die Figur 4a zeigt eine Datenorganisation mit einem segmentierten Applikationsdatenfeld ADF, welches hier drei unterschiedlich grosse Applikationssegmente S1, S2, S3 aufweist. Diese drei Segmente entsprechen drei unabhängigen Applikationen App1, App2, App3 von drei unabhängigen Anwendern oder Lizenznehmern mit Lizenznehmernummern SSC1, SSC2 und SSC3. Bei bisherigen, nicht-segmentierten Identifikationsmedien war für jede Applikation ein separates Medium IM1, IM2 und IM3 erforderlich.

Das Beispiel von Figur 4b zeigt eine Datenorganisation eines Identifikationsmediums IM-S, welche eine unabhängige Applikation App2 eines Lizenznehmers SSC2 auweist, welche mehr als ein Applikationssegment (hier die Applikationssegmente S2.1 und S2.2) aufweist. Im Prinzip kann dabei der Lizenznehmer SSC2 im Rahmen der Applikation App2 auch gewisse Verbindungen zwischen den Segmenten S2.1 und S2.2 auf tieferem Organisationslevel OL2 festlegen. Dies wird später an den Figuren 7 bis 10 weiter erläutert. Auch hier sind jedoch die Applikationen App1, App2 und App3 vollständig unabhängig voneinander.

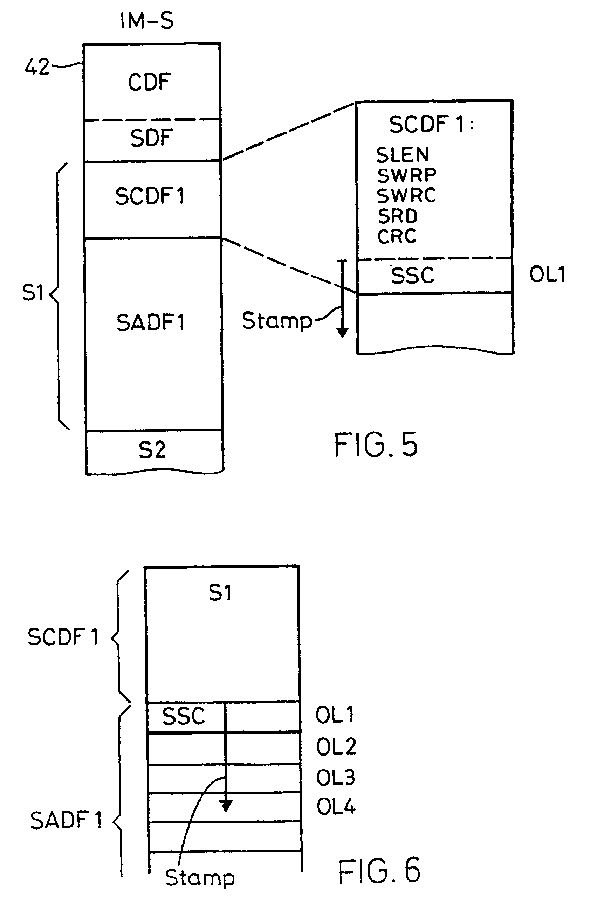

Figur 5 zeigt eine Datenorganisation eines Applikationssegments S1 mit einem Segment Header (Segmentkopf) SCDF1 und einem Applikationsdatenfeld SADF1. Im Segmentkopf SCDF sind für das betreffende Segment (S1) gültige Angaben und Bedingungen festgelegt. Das Datenfeld SADF1 ist für die Applikation frei verfügbar. Jedes Applikationssegment weist im Segment Header SCDF eine Anwendernummer SSC sowie Schreib- und Lesebedingungen für das Applikationssegment auf. Vorzugsweise werden dabei folgende Schreib- und Lesebedingungen festgelegt:
WRP = Write Protect, dies legt die Anzahl der schreibgeschützten Bytes im Speicher fest.
WRC = Write Condition, dies bestimmt, welche Schreib- und Lesestationen das Identifikationsmedium beschreiben und auch lesen dürfen. Dies sind nur Schreib- und Lesestationen, welche einen entsprechenden Taufdatensatz enthalten.
RD = Read Disable bedeutet einen Leseschutz, d.h. die Festlegung, wo der Datenträger gelesen werden darf und wo nicht.
Mit diesen Bedingungen legt jedes Identifikationsmedium IM-S selber fest, welche Stationen es lesen oder beschreiben dürfen. Jedes Applikationssegment enthält mit Vorteil auch eine Angabe der Segmentlänge LEN und eine Prüfsummenkontrolle CRC dieser Applikation.

Bei der Taufe einer den Identifikationsmedien IM-S zugeordneten Schreibund Lesestation WR wird im Rahmen des Autorisierungssystems A durch ein spezielles Taufmedium ein Taufdatensatz in die Schreib- und Lesestation WR eingeschrieben, welcher die Berechtigung zur Bearbeitung eines Identifikationsmediums enthält, welches diesem Taufdatensatz entspricht. Jeder Taufdatensatz beginnt mit der Anwendernummer SSC, entsprechend der unabhängigen Applikation, und im speziellen legt der Taufdatensatz auch diese Leseund Schreibbedingungen fest. Eine ungetaufte Schreib- und Lesestation WR kann also ein geschütztes Identifikationsmedium nicht lesen und beschreiben.

Figur 6 illustriert die Vererbung der Basisdatensätze (Stamp) eines jeden Segments, hier z.B. von Applikationssegment S1. Die Vererbung dieser Basisdaten wird an den folgenden Figuren 7 bis 9 genauer erläutert.

Diese zwangsweise Vererbung des Basisdatensatzes (Stamp) wird in Fig. 7 weiter illustriert. Die Länge des vererbten Basisdatensatzes nimmt dabei proportional zum Organisationslevel OL zu. Hier nimmt z.B. der Basisdatensatz um 1 Byte zu, wenn der Organisationslevel OL um eine Stufe zunimmt, z.B. von OL2 zu OL3.

Die Figuren 7 bis 9 illustrieren das für alle Identifikationsmedien und alle zugeordneten Schreib- und Lesestationen des Systems gültige Autorisierungskonzept A mit hierarchischen Organuisationslevels und der zwangsweisen Übertragung von Basisdatensätzen (Stamp), mit welchen die generelle Einhaltung der Systemregeln gesichert wird.

Die Figuren 8a, b illustrieren das hierarchische Autorisierungskonzept A, welches für alle Datenträger MI und für alle Schreib- und Lesestationen WR sowie für alle Autorisierungsdatenträger AMI und alle Programmierstationen WRI des Systems gültig ist und welches hierarchische Organisationsstufen oder Levels OL0, OL1, OL2, OL3, OL4 ... usw. aufweist.
Die höchste Stufe, der Organisationslevel OL0, entspricht dabei der Systemstufe, d.h. dem Inhaber oder Lizenzgeber 10 des ganzen Systems.
Die nächstuntere Stufe OL1 entspricht verschiedenen, unabhängigen Anwendern oder Lizenznehmern 101, 102, 103 usw. des Systems, z.B. verschiedenen Firmen, Gesellschaften, Gemeinden usw. Diese Stufe entspricht auch verschiedenen unabhängigen Applikationen, d.h. jedem unabhängigen Lizenznehmer und jeder unabhängigen Applikation ist eine SSC Nummer zugewiesen, welche diese von allen ändern SSC Nummern unterscheidet.
Die nächstuntere Stufe OL2 entspricht verschiedenen Anwendungen 101.1, 101.2 eines Anwenders 101, z.B. verschiedenen Tochterfirmen einer Firma 101.
Die nächste Stufe OL3 entspricht verschiedenen Bereichen einer Anwendung, z.B. den Bereichen 101.11 der Tochterfirma 101.1 und den Bereichen 101.21, 101,22 der Tochterfirma 101.2.
Die nächste Stufe OL4 entspricht verschiedenen Unterbereichen von 101.21, 101.22 usw.

Mit diesem hierarchischen Autorisierungssystem wird sichergestellt, dass sich verschiedene unabhängige Applikationen App1, App2, App3, bzw. unabhängige Anwender 101, 102, 103 in keiner Weise gegenseitig beeinflussen können, wobei aber dennoch ein Anwender, z.B. 101, die Organisation in seinem Bereich, d.h. ab OL2, frei festlegen kann. Dies wird illustriert durch die Separationslinien 70 in Figur 8. Damit wird garantiert, dass auch von dieser Seite her kein Missbrauch irgendwelcher Art möglich ist, denn z.B. Applikationen von 101 sind in 102 und in 103 generell nicht zugelassen.
Mit jedem Schritt von einer Organisationsstufe nach unten von OLn zu OLn + 1 in diesem Autorisierungssystem werden die Befugnisse der Datenträger eingeschränkt, so dass sie nur nach unten, d.h. für Organisationsstufen mit höherer Nummer, Gültigkeit haben.

Dazu werden in die Applikationssegmente einer bestimmten Organisationsstufe immer alle fest vorgeschriebenen Daten der höheren Organisationsstufen zwangsweise eingeschrieben, also quasi vererbt, wie dies Figur 9 weiter illustriert. Für jede tiefere Organisationsstufe OLn+1 wird ein zusätzlicher Speicherteil im Speicher 42 fest beschrieben, wobei gleichzeitig alle Daten der höheren Organisationsstufe OLn übernommen werden: es wird also nacheinander z.B. 10, 101, 101.1, 101.11 in die Speicherteile der Organisationsstufen OL0, OL1, OL2, OL3 eingeschrieben. Während, wie schon erläutert, bei bekannten bisherigen unsegmentierten Identifikationsmedien für jede unabhängige Applikation (101, 102, 103 usw.) ein eigenes Medium IM erforderlich war (Monomedien), ist es nun möglich, wie in Fig. 8b gezeigt ist, mehrere, beliebig wählbare unabhängige Applikationen auf nur einem einzigen Identifikationsmedium IM-S (Multimedium) zusammenzufassen. Dabei können z.B. mehr als 100 unabhängige Applikationen bzw. Lizenznehmernummern SSC bestehen und im segmentierten Identifikationsmedium IM-S ist es möglich, im Prinzip beliebig viele dieser unabhängigen Applikationssegmente aufzunehmen, soweit die Speicherkapazität des Mediums dies zulässt.

Dieses Autorisierungsprinzip wird noch verdeutlicht gemäss Figur 10, welche die Erzeugung bzw. Initialisierung von Identifikationsmedien mit Datenträgern MI illustriert. Alle Datenträger bzw. Identifikationsmedien des System müssen als Slavemedium 72 mittels eines Mastermediums 71 (als Autorisierungsdatenträger AMI) und einer speziellen Programmier-Schreib-Lesestation WRI erzeugt werden. Dabei wird auf ein neues, noch unbeschriebenes Identifikationsmedium bzw. auf ein Applikationssegment (hier z.B. auf S2) des Systems zwangsweise zusätzlich ein nicht löschbarer Basisdatensatz des Mastermediums 71 als Stamp für dies Applikation S2 auf das Slavemedium 72 übertragen, sozusagen vererbt oder eingeprägt. Dies geschieht nach den Regeln des hierarchischen Autorisierungssystems A. Dabei wird das erzeugte Identifikationsmedium (als Slavemedium 72) durch das Mastermedium 71 als Autorisierungsdatenträger AMI auch initialisiert. Diese Initialisierung ist Voraussetzung für die Zulassung zum Gebrauch des Applikationssegments S2 und des Identifikationsmediums IM-S im System. Nur initialisierte Identifikationsmedien und Applikationssegmente werden von den Schreib- und Lesestationen WR des Systems als gültig zugelassen. Dabei enthält jedes Autorisierungsmedium AMI eine Anwendernummer SSC, so dass es nur Applikationssegmente mit gleicher Anwendernummer SSC initialisieren und beschreiben kann.

Figur 11 zeigt die Kommunikation 20 zwischen einer Schreib- und Lesestation WR mit Sicherheitsmodul SM-S und einem Datenträger MI bzw. einem Applikationsdatenfeld S2 des Identifikationsmediums IM-S. Dabei wird die notwendige elektromagnetische HF Feldenergie (z.B. mit einer Trägerfrequenz von 13 MHz) zusammen mit der aufmodulierten Information von der Schreibund Lesestation WR an den Datenträger MI gesendet. Dort wird diese Feldenergie von der Antenne 45 aufgefangen und zum Betrieb des passiven Datenträgers MI sowie zum Senden der codierten Information an die WR eingesetzt. Eine besonders rationelle Ausführung dieser Informationsübertragung besteht darin, die Trägerfrequenz in einer Richtung, z.B. von der Schreib- und Lesestation WR zum Datenträger MI durch Pulsmodulation und in der Gegenrichtung (von MI zu WR) durch Belastungsmodulation zu modulieren. Figur 11 illustriert nun einen abhörsicheren Ablauf dieser Kommunikation zwischen Schreib- und Lesestation WR und einem Applikationssegment S2 des Identifikationsmediums IM-S. Sobald ein Identifikationsmedium in das Feld einer Schreib- und Lesestation WR gelangt, beginnt automatisch der Ablauf zur Synchronisierung von WR und IM-S:
- bei jedem neuen Identifikationsvorgang werden von der Schreib- und Lesestation WR neue Initialisierungsdaten 51 (z.B. in Form von beliebigen Zufallszahlen) erzeugt und an das Identifikationsmedium gesendet (20.1).
- Hier erfolgt eine Verknüpfung dieser Initialisierungsdaten 51 mit einem fest gespeicherten Verschlüsselungscode (52) des Identifikationsmediums. Das codierte Ergebnis (ein Schlüsselwort) wird dann an die Schreib- und Lesestation zurückgesendet (20.2),
- wo diese Information im Sicherheitsmodul SM-S entschlüsselt und geprüft wird (53), d.h. mit der in der WR ebenfalls gespeicherten Verschlüsselung (52) decodiert und mit den ursprünglichen, zufälligen Initialisierungsdaten 51 verglichen wird. An diesem Resultat kann die WR auch erkennen, um welche Art Medium es sich handelt.
- Anschliessend kann ohne Unterbruch eine synchronisierte Kommunikation (20.3) zwischen der Schreib- und Lesestation WR und dem Applikationssegment S2 des Identifikationsmediums IM-S stattfinden.
Mit dieser Methode werden die Taktgeneratoren und die Codegeneratoren von WR und IM-S synchronisiert. Nachdem ein Kommunikationsvorgang mit einem Applikationssegment abgeschlossen oder auch abgebrochen ist, muss jede neue Kommunikation (mit dem gleichen oder auch mit einem andern Applikationssegment) wieder mit neuen Intitialisierungsdaten 51 beginnen. Eine Aufzeichnug der übertragenen Daten und späteres Wiedereinspeisen ins Feld ist dadurch nicht möglich, weil die ursprünglichen Initialisierungsdaten 51 nicht mehr gültig sind.
Somit ist es auch nicht möglich, Kopien von funktionsfähigen Identifikationsmedien zu erzeugen.

Zusätzlich werden die übertragenen Daten durch eine CRC-Überprüfung, d.h. durch eine Prüfsummenkontrolle, bei der z.B. Nutzdaten mit Stammdaten des Datenträgers MI verknüpft werden, überprüft. Damit werden fehlerhafte Datenübertragungen praktisch ausgeschlossen. Dies ist vor allem wichtig, wenn sensible Daten oder Wertänderungen von einer autorisierten Schreibund Lesestation in ein Applikationssegment eingeschrieben werden, wobei neu eingeschriebene Daten überprüft werden, bevor sie Gültigkeit erhalten. Mit diesem Kommunikationsablauf wird somit sichergestellt, dass kein Abhören der Kommunikation zur Herstellung gefälschter Applikationssegmente auf den Identifikationsmedien missbraucht werden kann.

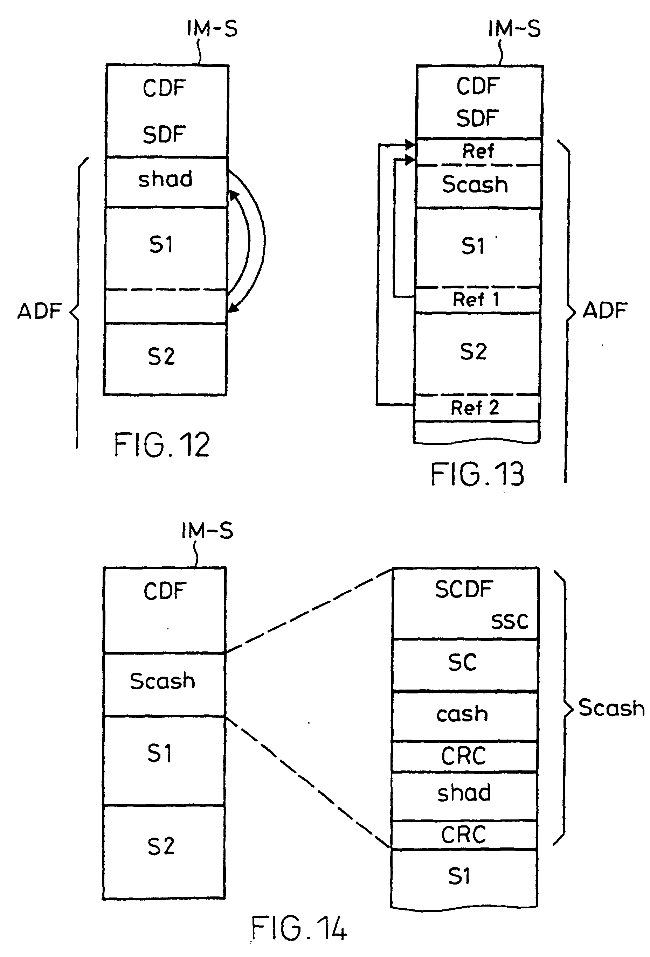

Figur 12 zeigt als weiteres wichtiges Sicherheitselement einen Schattenspeicher (shadow memory) im Applikationsspeicher ADF. Wenn ein Kommunikationsvorgang zwischen Identifikationsmedium IM-S und Schreib- und Lesestation WR gestört oder unterbrochen wird, bei dem neue sensible Daten in den Datenträger eingeschrieben werden, so ist es wichtig, dass dabei keine sensiblen Daten verloren gehen oder unerwünscht verändert werden. Ein solcher Kommunikationsvorgang mit sensiblen Daten sollte daher entweder vollständig und richtig ausgeführt werden oder ein unvollständiger oder unrichtiger Datentransfer sollte als Ganzes gestrichen werden. Eine solche Störung oder Unterbrechung eines Kommunikationsvorgangs kann vor allem auftreten, wenn sich das Identifikationsmedium während des Kommunikationsvorgangs aus dem Sendebereich R der Schreib- und Lesestation entfernt.

Mittels eines Schattenspeichers shad im Identifikationsmedium wird nun erreicht, dass jeder Kommunikationsvorgang entweder vollständig oder gar nicht eingeschrieben wird. Dabei werden zuerst die alten Daten im ADF, bzw. in einem Segment, in den Schattenspeicher übertragen und kontrolliert. Wenn die alten Daten korrekt im Schattenspeicher vorhanden sind, werden die neuen Daten von der Schreib- und Lesestation ins Applikationssegment übertragen und dort kontrolliert. Falls diese übertragenen neuen Daten vollständig und richtig sind, bleiben sie als gültig im Applikationssegment.
Falls die neuen Daten nicht vollständig und richtig übertragen wurden, werden alle neuen Daten im Applikationssegment gelöscht und es werden wieder die alten Daten aus dem Schattenspeicher ins Applikationssegment zurückgeschrieben.
Anschliessend kann der Kommunikationsvorgang in der gleichen Weise wiederholt werden, bis die neuen Daten korrekt und vollständig im Applikationssegment des Identifikationsmediums eingeschrieben sind.

Figur 13 zeigt als wichtiges Anwendungsbeispiel einen gemeinsamen Wertbereich als Applikationssegment Scash im Identifikationsmedium auf welchen andere berechtigte Applikationssegmente (S1, S2, S3) Zugriff haben. Der Zugriff aus den Applikationssegmenten erfolgt über einen Systemcode in einem Referenzbereich Ref. Jedes Segment weist ebenfalls einen Segment-Referenzbereich Ref1, Ref2, Ref3 auf. Damit kann das gemeinsame Cashsegment Scash an einer zugeordneten Schreib- und Lesestation als Geldaufladestation entsprechend einem einbezahlten Betrag aufgeladen werden. Dieser gutgeschriebene Betrag auf dem Identifikationsmedium IM-S kann an verschiedenen Stationen der Applikationssegmenten S1, S2 usw. sukzessive verbraucht werden. Dabei werden die einzelnen Bezüge jweils den entsprechenden Applikationssegmenten S1, S2 usw. belastet. Den Abbuchungen auf Seite des Identifikationsmediums IM-S entspricht so die Verrechung auf Seite der Applikationsstationen WR.

Figur 14 zeigt ein Ausführungsbeispiel einer Datenorganisation eines gemeinsamen Teilsegment Scash mit einem Segmentkopf SCDF, einem Referenzbereich mit einem Systemcode SC, einem Schattenspeicher shad, dem Wertbereich cash sowie mit Prüfsummenkontrollen CRC über diese Bereiche.

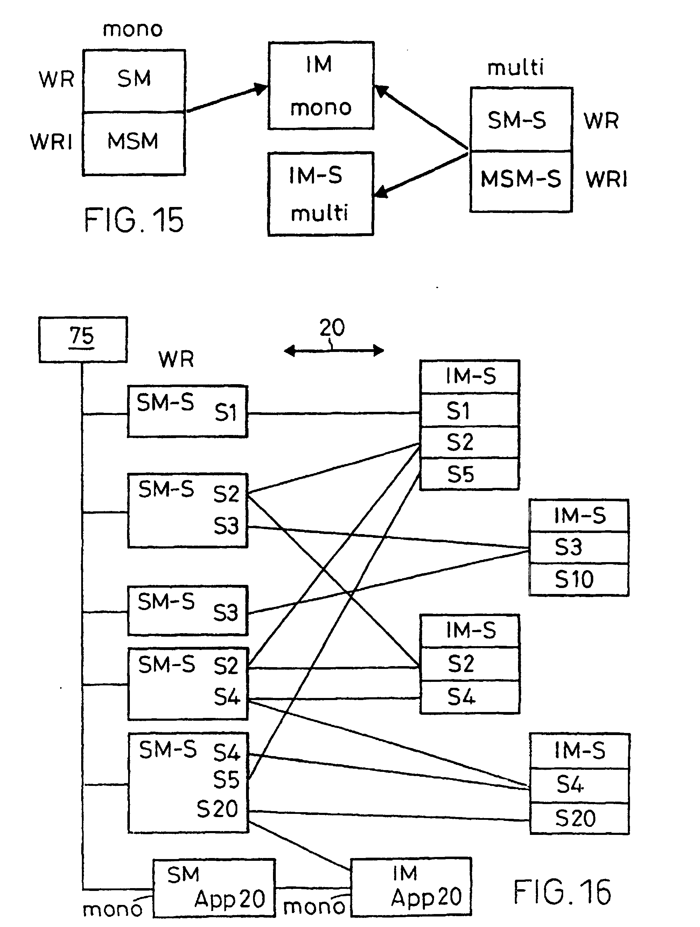

Figur 15 illustriert die Systemkompatibilität von segmentierten Identifikationsmedien IM-S (multi) und nicht-segmentierten Identifikationsmedien IM (mono) bezüglich der zugeordneten Schreib- und Lesestation WR mit entsprechenden Sicherheitsmodulen SM-S (multi) und SM (mono) sowie auch mit den zugeordneten Programmier-Schreib- und Lesestationen WRI mit Sicherheitsmodulen MSM-S (multi) und MSM (mono). Wie die Figur zeigt, ist das System aufwärtskompatibel, d.h. mono Identifikationsmedien können zusätzlich auch von segmentierten Sicherbeitsmodulen SM-S der Schreib- und Lesestationen und Sicberheitsmodulen MSM-S der Programmierstationen bearbeitet bzw. erstellt werden. Somit können in einer Anlage mit segmentierten Medien IM-S auch unsegmentierte Medien IM eingesetzt werden. Oder eine bestehende Anlage mit mono Medien kann zusätzlich auch mit multi Medien IM-S aufgerüstet werden. Die Sicherung dieser Kompatibilität erfolgt durch die Datenorganisation im Systemdatenfeld SDF der segmentierten Identifikationsmedien IM-S.

Figur 16 illustriert schematisch eine Anlage, welche mehrere unabhängige Applikationen aufweist, hier mit segmentierten Identifikationsmedien IM-S, welche beliebige verschiedene Kombinationen von Applikationssegmenten von S1 bis S20 aufweisen. Die unabhängigen Applikationen App1 bis App20 entsprechen den unabhängigen Lizenznehmern oder Anwendern mit Nummern SSC1 bis SSC20 und diese entsprechen den Applikationssegmenten S1 bis S20. Die zugeordneten dezentralen und autonom funktionsfähigen Schreibund Lesestationen WR weisen Taufdatensätze für eine oder mehrere Applikationen S1 bis S20 auf. Die Schreib- und Lesestationen WR sind zusätzlich an einen übergeordneten Hostcomputer 75 anschliessbar. In dieser Anlage sind auch nicht-segmentierte Identifikationsmedien IM einbezogen, wie das Beispiel mit S20 zeigt. Dies entspricht der Systemkompatibilität gemäss Figur 15.

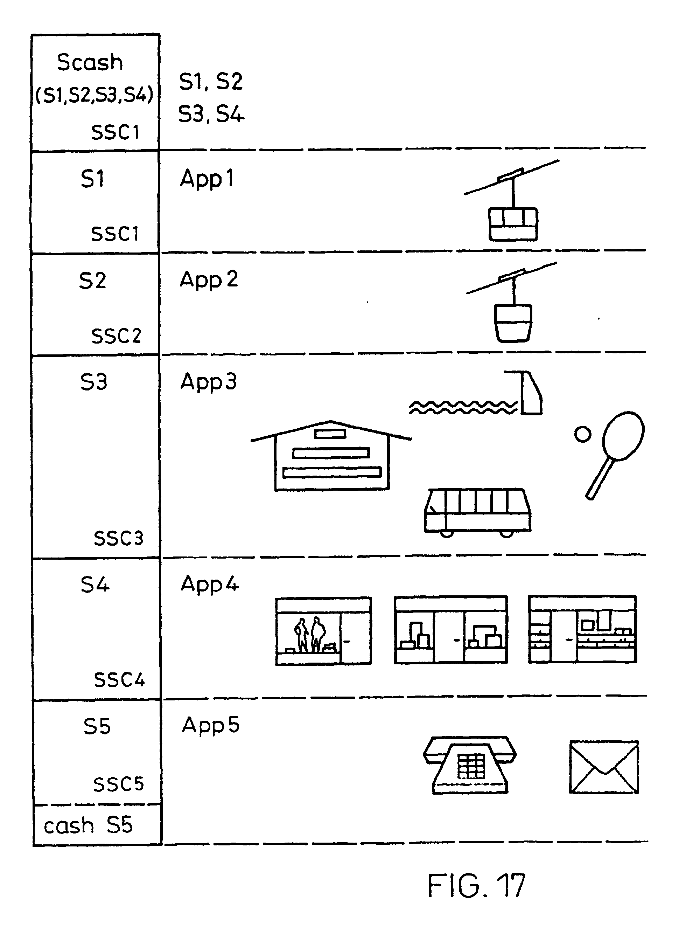

Figur 17 zeigt als Beispiel eine Anlage in einem geografischen Gebiet, z.B. in einer Ferienregion, mit den unabhängigen Anwendern SSC1 bis SSC5 mit den entsprechenden unabhängigen Applikationen und Applikationssegmenten S1 bis S5. Die Applikationen S1 und S2 seien zwei verschiedene Bergbahn- und Skiliftgebiete, welche von den entsprechenden Bahnbetriebsgesellschaften als Anwender SSC1 und SSC2 geführt werden.
Die Applikation S3 sei ein öffentlicher Bus, Schwimmbad und Sportanlagen, Parkgaragen und ein Hotel, welche von der Ortsgemeinde als SSC3 geführt werden.
Die Applikation S4 seien verschiedene Einkaufsläden, welche von einem Zusammenschluss einiger Geschäftsinhaber als Anwender SSC4 geführt werden.
Die Applikation S5 seien Telefon- und Postdienste, welche von der PTT als Anwender SSC5 geführt werden.
Das Applikationssegment S5 verfügt über einen eigenen Cashbereich, während die Segmente S1 bis S4 über ein gemeinsames Cashsegment Scash verfügen.
Hier kann ein erfindungsgemäss segmentiertes Identifikationsmedium IM-S im Prinzip beliebige Kombinationen von Segmenten S1 bis S5 aufweisen, wobei auch die einzelnen Segmente entsprechend der Festlegung des entsprechenden Anwenders in sich wiederum frei strukturiert werden können (siehe Figur 8).

Ein weiteres Beispiel ist eine Anlage mit verschiedenen Firmen als unabhängige Anwender. Dabei können Applikationssegmente je einer Firma, bzw. ihrem Personal, zur Verfügung stehen. Andere Applikationssegmente können von zwei oder mehreren Firmen gemeinsam betrieben werden, z.B. für gemeinsame Infrastruktur und Einrichtungen, und weitere Applikationssegmente können neben Firmenangehörigen auch Aussenstehenden zur Verfügung stehen, z.B. ein Personalrestaurant oder ein Schwimmbad, wobei auch unterschiedliche Benützungspreise für verschiedene Benützer vorgegeben werden können.

Das Identifikationsmedium kann zusätzlich noch mit einer persönlichen Codierungsfunktion kombiniert sein, um besonders hohen Sicherheitsanforderungen in bestimmten Anwendungen genügen zu können. Dazu können z.B. ein PIN Code oder biometrische Datencodes eingesetzt werden. Persönliche biometrische Daten werden z.B. aus Fingerabdrücken oder Finger-, Handund Kopfgeometrien ermittelt und mit den entsprechenden im Datenträger MI gespeicherten Codes 33 (Fig. 1, 3b, 18b) verglichen zwecks persönlicher Identifikation und Verifikation eines berechtigten Trägers.

Die Identifikationsmedien IM-S können in verschiedenen an sich bekannten Formen realisiert sein, meist z.B. als Karten. Sie können aber auch mit einem anderen Element kombiniert werden, z.B. mit einem persönlichen Gegenstand, etwa einem Armband, welches von einer Person immer mitgeführt wird. Durch diese Kombination bzw. Verbindung von Identifikationsmedium und mitgeführtem persönlichen Gegenstand wird sichergestellt, dass das Identifikationsmedium immer mitgeführt wird und damit der berechtigten Person auch immer zur Verfügung steht, wenn es gebraucht wird. Karten demgegenüber können auch in Kleidertaschen vergessen werden.

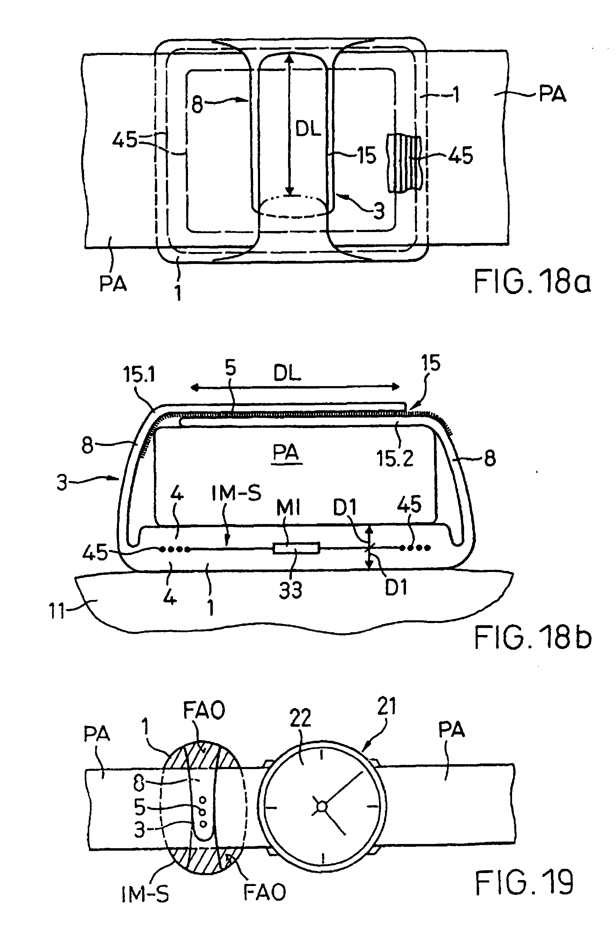

Figur 18 zeigt ein Beispiel eines mitführbaren Identifikationsträgers 1 als Identifikationsmedium IM-S in zwei Ansichten 18a, 18b. Der Identifikationsträger ist an einem persönlichen Armband PA, welches am Arm 11 getragen wird, in einer geeigneten Position auswechselbar befestigt. Der Identifikationsträger besteht aus einem separaten, flachen Trägerelement 1 und einer lösbaren Befestigungsvorrichtung 3, welche ein Auswechseln des persönlichen Armbands PA ermöglicht. Das Trägerelement 1 enthält den passiven integrierten elektronischen Datenträger MI mit Prozessor, elektrischer Schaltung und Datenspeicher sowie eine Antenne 45, welche von einem Dielektrikum 4, hier beidseitig von einer dielektrischen Überdeckungsschicht, umgeben ist. Die Antenne 45 (hier in Form einer Antennenschlaufe) weist mindestens teilweise offene Antennen-Abstrahlflächen FAO auf, welche nicht von elektrisch leitenden Teilen bzw. von elektromagnetisch undurchlässigem Material des persönlichen Armbands abgedeckt sind. Eine Illustration dazu findet sich im Beispiel von Figur 19. Zwecks optimaler Anpassung an die Rundung des Arms 11 und des Armbands kann der Datenträger leicht gebogen ausgeführt und mit Vorteil aus einem flexiblen Material z.B. aus Kuststoff aufgebaut sein. Die Befestigungsvorrichtung 3 ist hier einstückig mit dem Trägerelement 1 verbunden, und sie besteht z.B. aus einem oder zwei Bändern 8 mit je gegenüberliegenden, miteinander verbindbaren Enden. Das Trägerelement 1 ist hier unter dem Armband PA liegend, d.h. zwischen Arm 11 und Armband angebracht. Die Enden von 8 umschliessen dabei das Armband PA, so dass sie dem Arm 11 gegenüberliegend über dem Armband PA zusammen geschlossen werden. Die Länge dieses Verschlusses ist dabei so verstellbar, dass er unterschiedliche Querschnittsumfängen des persönlichen Armbands PA optimal angepasst werden kann. Dazu sind z.B. formschlüssige Verschlusselemente auf den Enden von 8 angeordnet (Fig. 19).

Die Figuren 18a, b illustrieren ein Beispiel von Befestigungsvorrichtungen mit Klettverschlüssen 15 an beiden Bandenden eines breiten zentralen Bandes 8. Auf einem Bandende ist der Schlaufenteil 15.2 des Klettverschlusses angebracht und das Gegenstück, der Hakenteil 15.1, befindet sich auf dem andern Bandende. Die Länge dieser beiden Klettverschlussteile 15.1 und 15.2 ist dabei so gewählt, dass eine maximale Längenänderung DL des Verschlusses - in Anpassung an verschieden grosse persönliche Armbänder PA - erreicht werden kann. Mit dem Klettverschluss ist ein besonders einfaches und praktisches Auswechseln des persönlichen Armbands PA möglich. Bei geeigneter Auslegung bezüglich Material und Lage der beiden Klettverschlussteile 15.1 und 15.2 ist ein sicherer, wenig auftragender Verschluss realisierbar, welcher sich unter normalen Behandlungsbedingungen nicht öffnet.

In der Ansicht von Figur 18b, im Querschnitt zum persönlichen Armband PA, ist der Aufbau des Trägerelements dargestellt mit einem Datenträger MI sowie mit einer flachen Antenne 45, welche beispielsweise als Luftschlaufe auf einer gedruckten Schaltung aufgebracht sein kann. Beidseitig der Antenne ist eine Überdeckung mit einem Dielektrikum 4 angebracht, welche eine Dicke D1 von z.B. vorzugsweise mindestens 0.5 mm aufweist und welche beispielsweise 0.5 bis 1 mm betragen kann.

In einer anderen Ausführung kann das Trägerelement 1 z.B. zusammen mit der Befestigungsvorrichtung 3 als elastischer Bügel eine das Armband PA umfassende Klammer bilden. Eine weitere Variante bildet eine Befestigungsart mittels vier elastischer Lappen, welche als Befestigungsvorrichtung an den Ecken des Trägerelements angebaut sind und welche an das persönliche Armband PA aufsteckbar sind. Das Trägerelement 1 und die Befestigungsvorrichtung 3 können auch als zwei separierbare und fest zusammenfügbare Teile ausgebildet sein. Eine weitere Ausführungsvariante bilden Ferrit-Antennen anstelle von Schlaufenantennen, z.B. als flacher Ferrit-Stab mit elektrischer Wicklung, dessen Achse parallel zum Unterarm 11 verläuft.

Es sind verschiedene Positionen bezüglich des Armbands PA möglich: Das Trägerelement 1 kann unter dem Armband, oben auf dem Armband oder seitlich neben dem Armband angeordnet sein.

Die Figur 19 zeigt ein Beispiel mit einer Armbanduhr 21 als persönliches Armband PA, wobei das Trägerelement 1 unter dem Armband und neben der Uhr 22 angeordnet und mit einem Band 8 als Befestigungsvorrichtung fixiert ist. Auch hier ergeben sich relativ grosse, nicht vom Armband PA abgedeckte offene Antennen-Abstrahlflächen FAO.

### Bezeichnungsliste P1087

- 1: Trägerelement
- 3: Befestigungsvorrichtung
- 4: Dielektrikum, Abdeckung
- 5: Verschluss von 3
- 8: Bänder von 3
- 10: Systeminhaber, Lizenzgeber
- 101, 102: unabhängige Anwender, Lizenznehmer
- 101.1, 1012: Anwendungen von 101

- 11: Arm, Handgelenk
- 15: Klettverschluss
- 15.1: Hakenteil
- 152: Schlaufenteil
- 20 20.1, 20.2,: Kommunikation HF-Signale
- 20.3: Kommunikationsablauf

- 21: Armbanduhr
- 22: Uhr
- 33: persönliche biometrische Codierungsfunktionen
- 41: Prozessor
- 42: Speicher
- 43: Steuerelektronik
- 44: Stammdaten mit Unikatsnummer
- 45: Antenne
- 46: gedruckte Schaltung (IC) Chip
- 51: Initialisierungsdaten (Zufallszahlen)
- 52: Verschlüsselungscode in MI
- 53: Entschlüsselung in WR
- 54: Antenne WR
- 70: Separationslinie
- 71: Mastermedium
- 72: Slavemedium
- 75: übergeordneter Rechner

- App 1, App2: unabhängige Applikationen (SSC)
- MI: Datenträger
- AMI: Autorisierungsdatenträger
- WR: Schreib- und Lesestation
- WRI: Programmier-Schreib-Lesestation
- CRC: Prüfsummenkontrolle
- A OL0, OL1,: Autorisierungssystem
- OL2: Organisationslevel

- W: Raumwinkelbereich für Kommunikation
- R: Kommunikationsreichweite
- IM: Identifikationsmedium (mono) nicht-segmentiert
- IM-S: Identifikationsmedium (multi) segmentiert
- SM: Sicherheitsmodul von WR (mono)
- SM-S: Sicherheitsmodul von WR (multi) segmentiert
- MSM: Sicherheitsmodul von WRI (mono)
- MSM-S: Sicherheitsmodul von WRI (multi)
- S1, S2, S3: Applikationssegmente
- CDF: gemeinsames Datenfeld
- SDF: Systemdatenfeld
- ADF: Applikationsdatenfeld
- SCDF: Segmentkopf (Segment Header)
- SADF: Segment-Applikationsdatenfeld
- SSC: Anwendernummer, Lizenznehmernummer
- WRP: Schreibschutz
- WRC: Schreibbedingungen
- RD: Leseschutz
- LEN: Segmentlänge
- Scash: gemeinsames Wertsegment
- cash: Wertbereich, Wertsegment
- Ref: Referenz Wertbereich
- shad: Schattenspeicher (shadow memory)
- SC: Systemcode
Taufdatensatz

- D1: Dicke von 4
- DL: Längenänderung von 3
- FAO: offene Antennen-Abstrahlflächen
- PA: persönliches Armband

## Patentansprüche

1. Identifikationsmedium mit passivem elektronischem Datenträger MI, welcher einen Prozessor, eine Steuerelektronik und einen Speicher sowie eine Antenne zur berührungslosen Übertragung von HF-Signalen als codierte Kommunikation an eine zugeordnete Schreib- und Lesestation WR aufweist,
**dadurch gekennzeichnet, dass** der Speicher (42) eine Datenorganisation aufweist mit
einem gemeinsamen Datenfeld CDF, welches unveränderbare und nicht kopierbare Stammdaten mit einer Unikatsnummer (44) enthält,
mit einem segmentierbaren Applikationsdatenfeld ADF, in welchem mehrere unabhängige Applikationen (App1, App2, App3)
von unabhängigen Anwendern (SSC1, SSC2, SSC3)
in Applikationssegmenten (S1, S2, S3) einschreibbar sind,
wobei jedes Applikationssegment eine Segmentkennung enthält und wobei ein für alle Identifikationsmedien IM-S und alle zugeordneten Schreib- und
Lesestationen WR gültiges hierarchisches Autorisierungssystem A festgelegt ist, mit welchem jedes Identifikationsmedium IM-S initialisiert werden muss und mit welchem die gegenseitige Unbeeinflussbarkeit aller unabhängigen Applikationen mit deren Applikationssegmenten (S 1, S2, S3) sichergestellt ist und wobei ein autorisierter unabhängiger Anwender (SSC3) seine Applikation (App3) in neue Identifikationsmedien und in Identifikationsmedien IM-S,
welche schon andere unabhängige Applikationen (App1, App2) enthalten, jederzeit selbständig einschreiben kann.

2. Identifikationsmedium nach Anspruch 1, **dadurch gekennzeichnet, dass** der Speicher auch ein Systemdatenfeld SDF enthält mit Daten zur Sicherung der Systemkompatibilität mit nicht-segmentierten Identifikationsmedien IM des gleichen Systems.

3. Identifikationsmedium nach Anspruch 1, **dadurch gekennzeichnet, dass** jedes Applikationssegment (S1, S2, S3) einen Segment Header (Segmentkopf) SCDF aufweist, in welchem für das betreffende Segment gültige Angaben und Bedingungen festgelegt sind sowie ein für die Applikation frei verfügbares Datenfeld SADF aufweist.

4. Identifikationsmedium nach Anspruch 3, **dadurch gekennzeichnet, dass** jedes Applikationssegment im Segment Header SCDF eine Anwendernummer SSC sowie Schreib- und Lesebedingungen für das Applikationssegment enthält.

5. Identifikationsmedium nach Anspruch 4, **dadurch gekennzeichnet, dass** jedes Applikationssegment folgende Schreib- und Lesebedingungen enthält: WRP = (Write Protect) Schreibschutz, WRC (Write Condition) = Schreibbedingungen und RD = Leseschutz.

6. Identifikationsmedium nach Anspruch 3, **dadurch gekennzeichnet, dass** jedes Applikationssegment zusätzlich die Segmentlänge LEN und eine Prüfsummenkontrolle CRC dieser Applikation enthält.

7. Identifikationsmedium nach Anspruch 1, **dadurch gekennzeichnet, dass** die Speichergrösse jedes Applikationssegments (S1, S2, S3) frei wählbar ist. (nach Bedarf und Speichergrösse)

8. Identifikationsmedium nach Anspruch 1, **dadurch gekennzeichnet, dass** mindestens eine unabhängige Applikation (App2) mehr als ein Applikationssegment (S2.1, S2.2, S2.3) aufweist.

9. Identifikationsmedium nach Anspruch 1, **dadurch gekennzeichnet, dass** zur Kommunikation zwischen Identifikationsmedium IM-S und Schreibund Lesestation WR bei jedem Identifikationsvorgang von der Schreibund Lesestation WR neue Initialisierungsdaten (51) mit Zufallszahlen erzeugt und an das Identifikationsmedium IM-S gesendet werden (20.1), welche dort mit einem fest gespeicherten Verschlüsselungscode (52) des Identifikationsmediums verknüpft und in dieser codierten Form an die Schreib- und Lesestation zurückgesendet werden (20.2), wo diese Information in einem Sicherheitsmodul SM-S der Schreib- und Lesestation WR entschlüsselt und geprüft wird (53) und worauf anschliessend eine synchronisierte Kommunikation (20.3) zwischen der Schreib- und Lesestation WR und dem Identifikationsmedium IM-S stattfindet.

10. Identifikationsmedium nach Anspruch 1, **dadurch gekennzeichnet, dass** die Kommunikation von der Schreib- und Lesestation WR immer nur mit einem einzigen Identifikationsmedium IM-S erfolgt und dass keine Kommunikation erfolgt, wenn sich gleichzeitig mehr als ein Identifikationsmedium im Sendebereich R der Schreib- und Lesestation WR befindet.

11. Identifikationsmedium nach Anspruch 1, **dadurch gekennzeichnet, dass** das Identifikationsmedium bzw. der Datenträger MI einen veränderbaren Speicher (EEPROM) mit mindestens 256 Byte Speicherplatz aufweist.

12. Identifikationsmedium nach Anspruch 1, **dadurch gekennzeichnet, dass** Antenne und Datenträger einstückig ausgebildet und auf einer gedruckten ASIC Schaltung (46) angeordnet sind.

13. Identifikationsmedium nach Anspruch 1, **dadurch gekennzeichnet, dass** ein unabhängiger Anwender (SSC3) seine unabhängige Applikation (App3) mittels eines Autorisierungsmediums (AMI), welches seine Anwendemummer (SSC3) enthält, selbständig in das Identifikationsmedium einschreiben kann.

14. Identifikationsmedium nach Anspruch 1, **dadurch gekennzeichnet, dass** im Applikationsdatenfeld ADF veränderbare Wertbereiche (cash) enthalten sind, welche von autorisierten Schreib- und Lesestationen beschreibbar sind.

15. Identifikationsmedium nach Anspruch 1, **dadurch gekennzeichnet, dass** im Applikationsdatenfeld ADF ein gemeinsamer Wertbereich cash als Applikationssegment (Scash) vorhanden ist, auf welchen andere berechtigte Applikationssegmente (S1, S2, S3) Zugriff haben.

16. Identifikationsmedium nach Anspruch 1, **dadurch gekennzeichnet, dass** der Datenträger MI eine zusätzliche persönliche Codierungsfunktion (33) enthält, wie einen PIN Code oder einen biometrischen Datencode.

17. Identifikationsmedium mit passivem elektronischem Datenträger MI, welcher einen Prozessor, eine Steuerelektronik und einen Speicher sowie eine Antenne zur berührungslosen Übertragung von HF-Signalen als codierte Kommunikation an eine zugeordnete Schreib- und Lesestation WR aufweist, wobei der Speicher (42) eine Datenorganisation aufweist mit
einem gemeinsamen Datenfeld CDF, welches unveränderbare und nicht
kopierbare Stammdaten mit einer Unikatsnummer (44) enthält,
mit einem segmentierbaren Applikationsdatenfeld ADF, in welchem mehrere unabhängige Applikationen (App1, App2, App3) in Applikationssegmenten (S1, S2, S3) einschreibbar sind,
wobei jedes Applikationssegment eine Segmentkennung enthält und wobei ein für alle Identifikationsmedien IM-S und alle zugeordneten Schreib- und Lesestationen WR gültiges hierarchisches Autorisierungssystem A festgelegt ist, mit welchem jedes Identifikationsmedium IM-S initialisiert werden muss und mit welchem die gegenseitige Unbeeinflussbarkeit aller unabhängigen Applikationen mit deren Applikationssegmenten (S1, S2, S3) sichergestellt ist, und wobei im Applikationsdatenfeld ADF ein Schattenspeicher shad vorhanden ist, in welchen während eines Schreibvorgangs mit sensiblen Daten diese Daten zwischengespeichert werden, so dass der Schreibvorgang immer entweder vollständig richtig oder gar nicht ausgeführt wird.

18. Anlage mit mehreren Identifikationsmedien nach Anspruch 1 für mehrere unabhängige Applikationen (App1, App2, App3) von mehreren unabhängigen Anwendern (SSC) mit mehreren zugeordneten autonomen dezentralen Schreib- und Lesestationen WR für diese Applikationen, wobei die Identifikationsmedien IM-S verschiedene Kombinationen von Applikationssegmenten (S1, S2, S3) aufweisen und wobei die Schreib- und Lesestationen WR an einen übergeordneten Host-Computer (75) anschliessbar sind.

19. Anlage nach Anspruch 18, **dadurch gekennzeichnet, dass** im Rahmen des gleichen Autorisierungssystems A zusätzlich nicht-segmentierte Identifikationsmedien IM von je nur einem unabhängigen Anwender (SSC) vorhanden sind, welche von allen autorisierten - segmentierten (SM-S) und nicht-segmentierten (SM) - Schreib- und Lesestationen WR bearbeitbar sind.

20. Anlage nach Anspruch 18, **dadurch gekennzeichnet, dass** sie in einem Feriengebiet mehrere unabhängige Applikationen umfasst für Freizeit- und Sportanlagen, Schwimmbad, Bergbahnen und Skilifte, Restaurants, Parkgaragen, öffentliche Verkehrsmittel, Getränke- und Nahrungsmittelautomaten, Einkaufsläden und Telefon.

21. Verfahren zur selbständigen Initialisierung einer Applikation (App1, App2, App3) durch einen autorisierten, unabhängigen Anwender (SSC1, SSC2, SSC3) auf ein Identifikationsmedium nach Anspruch 1 im Rahmen des hierarchischen Autorisierungssystems A, wobei jede Applikation mittels eines speziellen Autorisierungsmediums (AMI) und einer speziellen Programmier-Schreib-Lesestation (WRI) initialisiert werden muss.

22. Verfahren nach Anspruch 21, **dadurch gekennzeichnet, dass** jedes Identifikationsmedium IM-S, IM des Systems als Slavemedium (72) mittels eines übergeordneten Autorisierungsmediums AMI als Mastermedium (71) erzeugt werden muss, wobei zwangsweise ein nicht mehr veränderbarer Basisdatensatz des Mastermediums als Stamp auf das Slavemedium übertragen (vererbt) wird.

23. Verfahren nach Anspruch 22, **dadurch gekennzeichnet, dass** die Länge des vererbten Basisdatensatzes (Stamp) proportional zum Organisationslevel OL zunimmt, z.B. um ein Byte wenn der Organisationslevel OL um eine Stufe zunimmt.

24. Verfahren nach Anspruch 21, **dadurch gekennzeichnet, dass** jedes Autorisierungsmedium AMI immer nur eine Anwendernummer SSC enthält und dass es nur Applikationssegmente (S1, S2, S3) mit gleicher Anwendernummer SSC initialisieren und beschreiben kann.

25. Verfahren zur selbständigen Taufe einer den Identifikationsmedien nach Anspruch 1 zugeordneten Schreib- und Lesestation WR durch einen autorisierten, unabhängigen Anwender (SSC1, SSC2, SSC3) im Rahmen des hierarchischen Autorisierungssystems A, wobei zur Festlegung der Berechtigung zur Bearbeitung von Identifikationsmedien IM-S, welche eine unabhängige Applikation (App1) des Anwenders (SSC1) enthalten, durch ein spezielles Taufmedium ein Taufdatensatz in die Schreib- und Lesestation WR eingeschrieben wird, welcher Taufdatensatz der Applikation (App1) zugeordnet ist und welcher mindestens die Anwendernummer (SSC1) eines Basisdatensatzes (Stamp) der unabhängigen Applikation (App1) enthält.

26. Identifikationsmedium nach einem der Ansprüche 1 bis 17, **dadurch gekennzeichnet, dass** das Identifikationsmedium IM-S als von einer Person mitführbarer berührungsloser Identifikationsträger mit Zutrittsfunktionen ausgebildet ist und dass der Identifikationsträger als separates, flaches Trägerelement (1) an einem persönlichen Armband PA mittragbar und auswechselbar befestigt ist, und wobei das Trägerelement (1) den passiven integrierten elektronischen Datenträger MI mit Prozessor, elektrischer Schaltung und Speicher sowie eine integrierte Antenne (45) und eine lösbare Befestigungsvorrichtung (3) aufweist und wobei die Antenne von einem Dielektrikum (4) umgeben ist und mindestens teilweise offene Abstrahlflächen FAO aufweist, welche nicht durch elektrisch leitende Teile des persönlichen Armbands PA abgedeckt sind.

27. Identifikationsmedium nach Anspruch 26, **dadurch gekennzeichnet, dass** das persönliche Armband PA eine Armbanduhr (21) ist und das Trägerelement (1) so befestigbar ist, dass offene Antennen-Abstrahlflächen FAO vorhanden sind, welche nicht überdeckt werden.

## Claims

1. Identification medium with passive electronic data carrier MI, which has a processor, a control electronics and a memory, as well as an antenna for the contactless transmission of HF signals as coded communications to an associated read and write station WR,
**characterized in that** the memory (42) has a data organization
with a common data field CDF, which contains invariable and uncopiable master data with a unique record number (44),
having a segmentable application data field ADF, in which several independent applications (App1, App2, App3) of independent users (SSC1, SSC2, SSC3) can be entered in application segments (S1, S2, S3),
each application segment containing a segment identification and where a valid hierarchical authorization system A is established for all the identification media IM-S and all the associated read and write stations WR and with which each identification medium IM-S must be initialized and which ensures the mutual uninfluenceability of all the independent applications with their application segments (S1, S2, S3) and whereby an authorized independent user (SSC3) at any time autonomously can enter his application (App3) into new identification media and into identification media IM-S which already contain other independent applications (App1, App2).

2. Identification medium according to claim 1, **characterized in that** the memory also contains a system data field SDF with data for ensuring the system compatibility with unsegmented identification media IM of the same system.

3. Identification medium according to claim 1, **characterized in that** each application segment (S1, S2, S3) has a segment header SCDF, in which are established information and conditions valid for the particular segment and having a freely available data field SADF for the application.

4. Identification medium according to claim 3, **characterized in that** each application segment in the segment header SCDF has a user number SSC, as well as read and write conditions for the application segment.

5. Identification medium according to claim 4, **characterized in that** each application segment contains the following read and write conditions: WRP = write protect, WRC = write condition and RD = read disable.

6. Identification medium according to claim 3, **characterized in that** each application segment additionally contains the segment length LEN and a check sum control CRC of said application.

7. Identification medium according to claim 1, **characterized in that** the storage size of each application segment (S1, S2, S3) is freely selectable (according to needs and the storage size).

8. Identification medium according to claim 1, **characterized in that** at least one independent application (App2) has more than one application segment (S2.1, S2.2, S2.3).

9. Identification medium according to claim 1, **characterized in that** for communication between identification medium IM-S and read and write station WR for each identification process from the read and write station WR new initialization data (51) with random numbers are produced and transmitted to the identification medium IM-S (20.1) and are linked there with a fixed-stored encrypting code (52) of the identification medium and in this encoded form are transmitted back (20.2) to the read and write station, where said information is decrypted and checked (53) in a security module SM-S of the read and write station WR and after which there is a synchronized communication (20.3) between the read and write station WR and the identification medium IM-S.

10. Identification medium according to claim 1, **characterized in that** the communication from the read and write station WR always only takes place with a single identification medium IM-S and that no communication takes place if simultaneously there is more than one identification medium in the transmitting area R of the read and write station WR.

11. Identification medium according to claim 1, **characterized in that** the identification medium or data carrier MI has a modifiable memory (EEPROM) with an at least 256 byte storage location.

12. Identification medium according to claim 1, **characterized in that** the antenna and data carrier are constructed in one piece and located on a printed ASIC circuit (46).

13. Identification medium according to claim 1, **characterized in that** an independent user (SSC3) autonomously can enter his independent application (App3) into the identification medium by means of a authorization medium (AMI) which contains his user number (SSC3).

14. Identification medium according to claim 1, **characterized in that** the application data field ADF contains modifiable cash segments (cash), which can be written by authorized read and write stations.

15. Identification medium according to claim 1, **characterized in that** in the application data field ADF there is a common cash segment cash as the application segment (Scash), to which other authorized application segments (S1, S2, S3) have access.

16. Identification medium according to claim 1, **characterized in that** the data carrier MI contains an additional personal encoding function (33), such as a PIN code or a biometric data code.

17. Identification medium with passive electronic data carrier MI, which has a processor, a control electronics and a memory, as well as an antenna for the contactless transmission of HF signals as coded communications to an associated read and write station WR,
whereby the memory (42) has a data organization
with a common data field CDF, which contains invariable and uncopiable master data with a unique record number (44),
having a segmentable application data field ADF, in which several independent applications (App1, App2, App3) can be entered in application segments (S1, S2, S3),
each application segment containing a segment identification and where a valid hierarchical authorization system A is established for all the identification media IM-S and all the associated read and write stations WR and with which each identification medium IM-S must be initialized and which ensures the mutual uninfluenceability of all the independent applications with their application segments (S1, S2, S3) and whereby there is a shadow memory shad in the application data field ADF, in which during a writing process with sensitive data said data are buffer stored, so that the writing process is performed either completely correctly or not at all.

18. System with several identification media according to claim 1 for several independent applications (App1, App2, App3) of several independent users (SSC) with several associated, autonomous, decentralized read and write stations WR for said applications, the identification media IM-S having different combinations of application segments (S1, S2, S3) and in which the read and write stations WR are connectable to a master host computer (75).

19. System according to claim 18, **characterized in that** within the framework of the same authorization system A there are additional unsegmented identification media IM from in each case only one independent user (SSC) and which can be processed by all authorized segmented (SM-S) and unsegmented (SM) read and write stations WR.

20. System according to claim 18, **characterized in that** in a holiday area it covers several independent applications for leisure and sporting activities, swimming pool, mountain railways and ski lifts, restaurants, parking garages, public transport, food and drink machines, shops and telephone.

21. Method for autonomous initializing an application (App1, App2, App3) by an authorized independent user (SSC1, SSC2, SSC3) onto an identification medium according to claim 1, within the scope of the hierarchical authorization system A, whereby each application must be initialized by means of a specific authorization medium (AMI) and a specific programming read/write station (WRI).

22. Method according to claim 21, **characterized in that** each identification medium IM-S, IM of the system must be produced as a slave medium (72) by means of a master authorization medium AMI as the master medium (71) and necessarily a no longer modifiable master medium stamp is transmitted to the slave medium (inherited).

23. Method according to claim 22, **characterized in that** the length of the inherited stamp increases in proportion to the organization level OL, e.g. by one byte if the organization level OL increases by one stage.

24. Method according to claim 21, **characterized in that** each authorization medium AMI always only contains one user number SSC and that only application segments (S1, S2, S3) with the same user number SSC can be initialized and written.

25. Method for autonomous launching a read and write station WR associated with the identification media according to claim 1 by an authorized independent user (SSC1, SSC2, SSC3) within the framework of the hierarchical authorization system A, whereby for the determination of the authorization for the processing of identification media IM-S, which contain an independent application (App1) of the user (SSC1), a launch data set is entered in the read and write station WR by a specific launching medium, which launch data set is associated to the application (App1) and which contains at least the user number (SSC1) of a basic data set (Stamp) of the independent application (App1).

26. Identification medium according to one of the claims 1 to 17, **characterized in that** the identification medium IM-S is constructed as a contactless identification carrier with access functions which can be carried or worn by a person and that the identification carrier as a separate, flat carrier element (1) is carriable and interchangeably fixed to a personal bracelet PA and in which the carrier element (1) has the passive, integrated
electronic data carrier MI with processor, electric circuit and memory, as well as an integrated antenna (45) and a detachable fastening device (3) and in which the antenna is surrounded by a dielectric (4) and has at least partly open radiating surfaces FAO, which are not covered by electrically conductive parts of the personal bracelet PA.

27. Identification medium according to claim 26, **characterized in that** the personal bracelet PA is a wristwatch (21) and the carrier element (1) can be fastened in such a way that there are open antenna radiating surfaces FAO, which are not covered.

## Revendications

1. Moyen d'identification avec support de données passif électronique MI qui comporte un processeur, un dispositif électronique de commande et une mémoire ainsi qu'une antenne pour la transmission sans contact de signaux HF sous forme de communication codée à une station d'écriture et de lecture WR associée, **caractérisé en ce que** la mémoire (42) comporte une organisation de données avec une zone commune de données CDF qui contient des données de base non modifiables et non copiables avec un numéro Unikat (44), avec une zone de données d'application segmentable ADF dans laquelle plusieurs applications indépendantes (App1, App2, App3) peuvent être écrites par des utilisateurs indépendants (SSC1, SSC2, SSC3) dans des segments d'application (S1, S2, S3), moyennant quoi chaque segment d'application comprend une identification de segment et moyennant quoi on détermine un système d'autorisation hiérarchique A valable pour tous les moyens d'identification IM-S et pour toutes les stations d'écriture et de lecture WR associées, avec lequel chaque moyen d'identification IM-S doit être initialisé et avec lequel la non-influençabilité mutuelle de toutes les applications indépendantes avec leurs segments d'application (S1, S2, S3) est assurée et moyennant quoi un utilisateur indépendant autorisé (SSC3) peut écrire son application (App3) de manière autonome, à n'importe quel moment, dans de nouveaux moyens d'identification et dans de moyens d'identification IM-S qui contiennent déjà d'autres applications indépendantes (App1, App2).

2. Moyen d'identification selon la revendication 1, **caractérisé en ce que** la mémoire comprend également une zone de données de système SDF avec des données pour assurer la compatibilité du système avec des moyens d'identification non-segmentés IM du même système.

3. Moyen d'identification selon la revendication 1, **caractérisé en ce que** chaque segment d'application (S1, S2, S3) comporte un Segment Header (en-tête de segment) SCDF, dans lequel sont fixées des données et des conditions valables pour le segment concerné, ainsi qu'une zone de données SADF librement disponible.

4. Moyen d'identification selon la revendication 3, **caractérisé en ce que** chaque segment d'application dans le Segment Header SCDF comprend un numéro d'utilisateur SSC ainsi que des conditions d'écriture et de lecture pour le segment d'application.

5. Moyen d'identification selon la revendication 4, **caractérisé en ce que** chaque segment d'application comprend les conditions d'écriture et de lecture suivantes : WRP = (Write protect) protection d'écriture, WRC (Write Condition) = conditions d'écriture et RD = protection de lecture.

6. Moyen d'identification selon la revendication 3, **caractérisé en ce que** chaque segment d'application comprend, en outre, la longueur de segment LEN et un contrôle par redondance cyclique CRC de cette application.

7. Moyen d'identification selon la revendication 1, **caractérisé en ce que** la taille de la mémoire de chaque segment d'application (S1, S2, S3) peut être choisie librement (suivant le cas et la taille de la mémoire).

8. Moyen d'identification selon la revendication 1, **caractérisé en ce qu'**au moins une application indépendante (App2) comporte plus d'un segment d'application (S2.1, S2.2, S2.3).

9. Moyen d'identification selon la revendication 1, **caractérisé en ce que**, à chaque opération d'identification de la station d'écriture et de lecture WR, pour la communication entre le moyen d'identification IM-S et la station d'écriture et de lecture WR, de nouvelles données d'initialisation (51) avec des nombres aléatoires sont créées et envoyées (20.1) au moyen d'identification IM-S, où elles sont liées à un code de codage (52) du moyen d'identification enregistré dans la mémoire fixe et renvoyées (20.2) sous cette forme codée à la station d'écriture et de lecture où cette information est décodée et contrôlée (53) dans un module de protection SM-S de la station d'écriture et de lecture WR et après quoi une communication synchronisée (20.3) s'établit entre la station d'écriture et de lecture WR et le moyen d'identification IM-S.

10. Moyen d'identification selon la revendication 1, **caractérisé en ce que** la communication à partir de la station d'écriture et de lecture WR se fait toujours seulement avec un seul moyen d'identification IM-S et **en ce qu'**aucune communication ne se produit lorsqu'il y a simultanément plus d'un moyen d'identification dans la zone d'envoi R de la station d'écriture et de lecture WR.

11. Moyen d'identification selon la revendication 1, **caractérisé en ce que** le moyen d'identification ou le support de données MI comporte une mémoire modifiable (EEPROM) avec au moins 256 octets d'espace mémoire.

12. Moyen d'identification selon la revendication 1, **caractérisé en ce que** l'antenne et le support de données sont configurés en une seule partie et sont disposés sur un circuit imprimé ASIC (46).

13. Moyen d'identification selon la revendication 1, **caractérisé en ce qu'**un utilisateur indépendant (SSC3) peut écrire de manière autonome son application indépendante (App3) dans le moyen d'identification à l'aide d'un moyen d'autorisation (AMI) qui contient son numéro d'utilisateur (SSC3).

14. Moyen d'identification selon la revendication 1, **caractérisé en ce que** des domaines de valeurs modifiables (cash), qui sont inscriptibles par des stations d'écriture et de lecture autorisées, sont compris dans la zone de données d'application ADF.

15. Moyen d'identification selon la revendication 1, **caractérisé en ce qu'**un domaine de valeur commun Cash se trouve dans la zone de données d'application ADF sous forme de segment d'application (Scash) auquel ont accès d'autres segments d'application autorisés (S1, S2, S3).

16. Moyen d'identification selon la revendication 1, **caractérisé en ce que** le support de données MI comprend une fonction de codage personnelle supplémentaire (33), comme par exemple un code PIN ou un code de données biométrique.

17. Moyen d'identification avec support de données passif électronique MI qui comporte un processeur, un dispositif électronique de commande et une mémoire ainsi qu'une antenne pour la transmission sans contact de signaux HF sous forme de communication codée à une station d'écriture et de lecture WR associée, moyennant quoi la mémoire (42) comporte une organisation de données avec une zone commune de données CDF qui contient des données de base non modifiables et non copiables avec un numéro Unikat (44), avec une zone de données d'application segmentable ADF dans laquelle plusieurs applications indépendantes (App1, App2, App3) peuvent être écrites dans des segments d'application (S1, S2, S3), moyennant quoi chaque segment d'application comprend une identification de segment et moyennant quoi on détermine un système d'autorisation hiérarchique A valable pour tous les moyens d'identification IM-S et pour toutes les stations d'écriture et de lecture WR associées, avec lequel chaque moyen d'identification IM-S doit être initialisé et avec lequel la non-influençabilité mutuelle de toutes les applications indépendantes avec leurs segments d'application (S1, S2, S3) est assurée et moyennant quoi une antémémoire Shad est présente dans la zone de données d'application ADF, dans laquelle, pendant une opération d'écriture avec des données sensibles, ces données sont stockées temporairement, de sorte que l'opération d'écriture est toujours réalisée soit totalement correctement soit pas du tout.

18. Installation avec plusieurs moyens d'identification selon la revendication 1 pour plusieurs applications indépendantes (App1, App2, App3) de plusieurs utilisateurs indépendants (SSC) avec plusieurs stations d'écriture et de lecture WR associées, autonomes, décentralisées pour ces applications, moyennant quoi les moyens d'identification IM-S comportent diverses combinaisons de segments d'application (S1, S2, S3) et moyennant quoi les stations d'écriture et de lecture WR peuvent être raccordées à un ordinateur central (Host Computer) (75).

19. Installation selon la revendication 18, **caractérisée en ce que** des moyens d'identification IM supplémentaires non segmentés de chacun un seul utilisateur indépendant (SSC), qui peuvent être traités par toutes les stations d'écriture et de lecture WR autorisées - segmentées (SM-S) et non segmentées (SM), sont présents dans le cadre du même système d'autorisation A.

20. Installation selon la revendication 18, **caractérisée en ce qu'**elle comprend, dans une zone de vacance, plusieurs applications indépendantes pour des installations de loisir et sportives, une piscine, des funiculaires et des téléskis, des restaurants, des parcs de stationnement, des moyens de transport publics, des distributeurs de boissons et d'aliments, des magasins et des téléphones.

21. Procédé pour l'initialisation autonome d'une application (App1, App2, App3) par un utilisateur indépendant autorisé (SSC1, SSC2, SSC3) sur un moyen d'identification selon la revendication 1 dans le cadre du système d'autorisation hiérarchisé A, moyennant quoi chaque application doit être initialisée à l'aide d'un moyen d'autorisation spécial (AMI) et d'une station spéciale de programmation d'écriture et de lecture (WRI).

22. procédé selon la revendication 21, **caractérisé en ce que** chaque moyen d'identification IM-S, IM du système doit être généré comme moyen esclave (72) à l'aide d'un moyen d'autorisation supérieur AMI comme moyen maître (71), moyennant quoi un ensemble de données de base du moyen maître, qui forcément n'est plus modifiable, est transféré (transmis) comme un timbre au moyen esclave.

23. procédé selon la revendication 22, **caractérisé en ce que** la longueur de l'ensemble de données de base transmis (timbre, stamp) augmente proportionnellement au niveau d'organisation OL, par exemple d'un octet lorsque le niveau d'organisation OL augmente d'un degré.

24. procédé selon la revendication 21, **caractérisé en ce que** chaque moyen d'autorisation AMI ne contient toujours qu'un seul numéro d'utilisateur SSC et **en ce qu'**il ne peut initialiser et écrire que des segments d'application (S1, S2, S3) ayant le même numéro d'utilisateur SSC.

25. Procédé pour le baptême autonome d'une station d'écriture et de lecture WR associée aux moyens d'identification selon la revendication 1 par un utilisateur indépendant autorisé (SSC1, SSC2, SSC3) dans le cadre du système d'autorisation hiérarchisé A, moyennant quoi, pour déterminer l'autorisation pour le traitement des moyens d'identification IM-S qui comprennent une application indépendante (App1) de l'utilisateur (SSC1), un ensemble de données de baptême est écrit dans la station d'écriture et de lecteur WR à l'aide d'un moyen de baptême spécial, lequel ensemble de données de baptême est associé à l'application (App1) et comprend au moins le numéro d'utilisateur (SSC1) d'un ensemble de données de base (timbre) de l'application indépendante (App1).

26. Moyen d'identification selon l'une quelconque des revendications 1 à 17, **caractérisé en ce que** le moyen d'identification IM-S est configuré comme un support d'identification sans contact transportable par une personne avec fonctions d'accès et **en ce que** le support d'identification est fixé comme un élément de support (1) plat, séparé, portable et remplaçable sur un bracelet personnel PA et moyennant quoi l'élément de support (1) comprend le support de données passif électronique intégré MI avec processeur, circuit électrique et mémoire ainsi qu'une antenne intégrée (45) et un dispositif de fixation détachable (3) et moyennant quoi l'antenne est entourée par un diélectrique (4) et comporte des surfaces radiantes au moins partiellement ouvertes FAO qui ne sont pas recouvertes par des parties électroconductrices du bracelet personnel PA.

27. Moyen d'identification selon la revendication 26, **caractérisé en ce que** le bracelet personnel PA est un bracelet-montre (21) et **en ce que** l'élément de support (1) peut être fixé de manière à ce que des surfaces radiantes d'antenne ouvertes FAO, qui ne sont pas recouvertes, soient présentes.
